# EUROPEAN PATENT APPLICATION

(11) **EP 4 752 792 A1**
(43) Date of publication of application: **03.06.2026**
(21) Application number: 24871377.8
(22) Date of filing: 30.05.2024
(51) Int. Cl.: G06N 10/40, H04N 25/70, H04N 25/707

(54) **QUANTUM BIT DETECTION MODULE AND QUANTUM BIT CONTROL SYSTEM**

(30) Priority: 26.09.2023 JP 2023163031
(71) Applicant: Hamamatsu Photonics K.K., Hamamatsu-shi, Shizuoka 435-8558 (JP)
(72) Inventor: MIHOYA Takashi, Hamamatsu-shi, Shizuoka 435-8558 (JP); MIURA Taiki, Hamamatsu-shi, Shizuoka 435-8558 (JP); NAKAJIMA Mao, Hamamatsu-shi, Shizuoka 435-8558 (JP)
(74) Representative: Hoffmann Eitle
(86) International application number: PCT/JP2024/019914
(87) International publication number: WO 2025/069567

(57) **Abstract**

The qubit detection module includes an imaging unit, a processing unit, and an output unit. The imaging unit captures an imaging area including the arrangement position of a qubit and generates imaging data corresponding to the imaging area. The processing unit calculates state information indicating the state of the qubit, with a smaller data volume than the imaging data, based on the imaging data. The output unit outputs the state information to the outside of the module.

## Description

The present disclosure relates to a qubit detection module and a qubit control system.

### Background Art

In quantum computing technology, qubits are constructed utilizing the properties of quantum superposition. It is generally known that controlling the state of quantum superposition requires advanced techniques, and the state of quantum superposition is highly unstable. Therefore, in quantum computing, error correction of qubits is of critical importance.

### Citation List

### Non-Patent Literature

[Non-Patent Literature 1] Dolev Bluvstein, Harry Levine, Giulia Semeghini, Tout T. Wang, Sepehr Ebadi, Marcin Kalinowski, Alexander Keesling, Nishad Maskara, Hannes Pichler, Markus Greiner, Vladan Vuletic & Mikhail D. Lukin, "A quantum processor based on coherent transport of entangled atom arrays," Nature, Vol. 604, pp. 451-471, 2022.

### Summary of Invention

### Technical Problem

For example, in a technology where the state of a qubit is detected and feedback control is applied to the qubit state based on the detection result, high-speed detection of the qubit state is required to perform feedback control rapidly.

An aspect of the present disclosure aims to provide a qubit detection module and a qubit control system capable of accelerating qubit state detection.

### Solution to Problem

A qubit detection module according to one aspect includes an imaging unit, a processing unit, and an output unit. The imaging unit captures an imaging area including the arrangement position of a qubit and generates imaging data corresponding to the imaging area. The processing unit calculates state information indicating the state of the qubit, with a smaller data volume than the imaging data, based on the imaging data. The output unit outputs the state information to the outside of the module.

In the above qubit detection module, the state information of the qubit, calculated based on the imaging data, is output to the outside of the module. Therefore, compared to outputting the image data of the captured qubit to the outside of the module, the amount of output data is reduced, enabling high-speed output of qubit information. In other words, qubit state detection can be accelerated.

The state information may be binary data indicating the state of the qubit. Since the state information is expressed as binary data, the amount of output data can be significantly reduced.

The processing unit may set multiple target areas smaller than the imaging area within the imaging area and calculate state information for each of the multiple target areas. With this configuration, multiple qubits can be detected by a single imaging unit.

The imaging data may be composed of multiple pieces of pixel data. The imaging unit may sequentially generate each item of pixel data constituting the multiple pieces of pixel data. The processing unit may acquire the imaging data by sequentially obtaining the pixel data sequentially generated by the imaging unit and calculate state information for one target area once all pixel data for that target area among the multiple target areas have been acquired during the acquisition of the imaging data. With this configuration, data output can be performed for each target area, enabling the output of qubit information without delay.

The processing unit may have a threshold for determining the state of the qubit and may calculate the coordinates of the qubit as state information based on the threshold. With this configuration, there is no need to set target areas.

A qubit control system according to one aspect includes the above qubit detection module and a qubit control unit. The qubit control unit controls the state of the qubit based on the state information output from the qubit detection module.

The imaging unit may continuously capture the imaging area over multiple frames, and the processing unit may calculate state information for each frame of the imaging data. With this configuration, data output can be performed for each frame, enabling the output of qubit information without delay.

In the above qubit control system, the state information of the qubit, calculated based on the imaging data, is output from the module to the qubit control unit. Therefore, compared to outputting the image data of the captured qubit to the qubit control unit, the amount of output data is reduced, enabling high-speed output of qubit information. Consequently, by accelerating qubit state detection, the qubit control unit can execute state control of the qubit at a high speed.

### Advantageous Effects of Invention

According to the qubit detection module and qubit control system of one aspect, qubit state detection can be accelerated.

### Brief Description of Drawings

FIG. 1 is a diagram illustrating the configuration of a qubit control system according to one embodiment.
FIG. 2 is a diagram showing a histogram of integrated luminance values created based on simulation.
FIG. 3 is a diagram schematically illustrating an image captured by the qubit detection module.
FIG. 4 is a diagram for explaining an example of the output form from the qubit detection module to the qubit control unit.
FIG. 5 is a diagram for explaining another example of the output form from the qubit detection module to the qubit control unit.

### Description of Embodiments

Hereinafter, embodiments of the present disclosure will be described in detail with reference to the drawings. For convenience, substantially identical elements may be denoted by the same reference numerals, and their descriptions may be omitted.

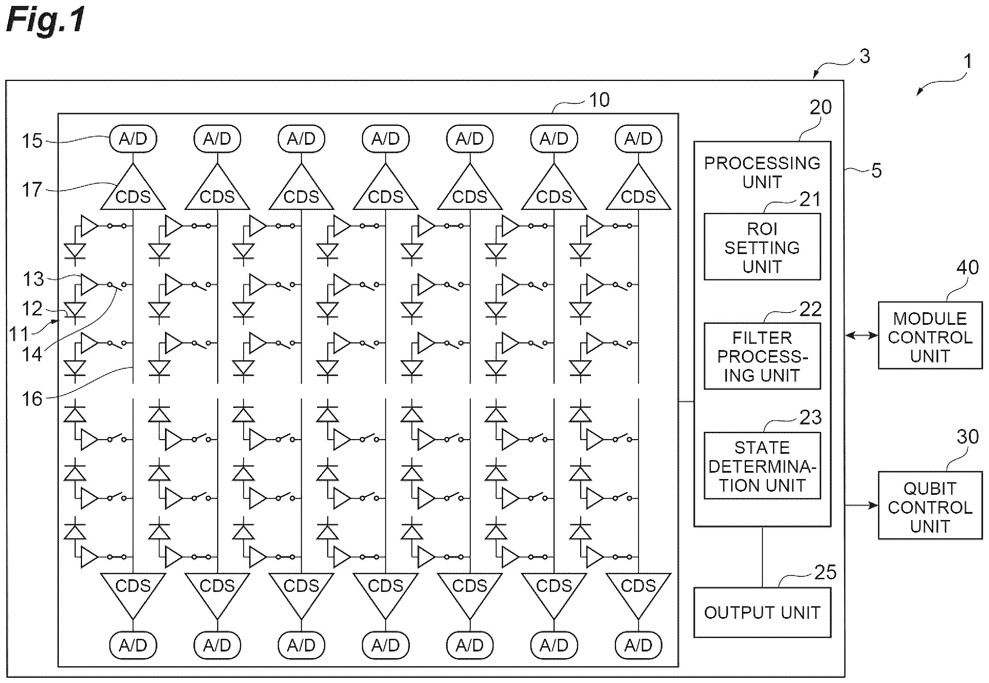

FIG. 1 is a diagram schematically illustrating the configuration of a qubit control system. The qubit control system 1 according to the present embodiment is a system for controlling the state of a qubit capable of being in a quantum superposition state. The qubit control system 1 can be utilized, for example, in quantum computer technology that uses neutral atoms trapped by optical tweezers or the like as qubits.

In the present embodiment, a qubit composed of neutral atoms has at least two distinct energy levels (internal states). For example, a qubit may have at least a low energy level |↓>, a higher energy level |↑> than |↓>, and an energy level |e'> that is different from |↑> and excites |↓> to emit fluorescence. For instance, the qubit can be in a superposition state of |↓> and |↑>. When the qubit is in |↓> and irradiated with light resonant between |↓> and |e'>, it absorbs the light, transitions to |e'>, emits fluorescence, and returns to |↓>. When the qubit is in |↑> and irradiated with the same light, it does not transition to |e'>, and no fluorescence is observed. Hereinafter, |↓> may be referred to as the ground level, |↑> as the excited level, and |e'> as the fluorescence level. Additionally, light resonant between the ground level and the fluorescence level may be referred to as resonant light.

As shown in FIG. 1, an exemplary qubit control system 1 includes at least a qubit detection module 3, a qubit control unit 30, and a module control unit 40. The qubit detection module 3 is a device for detecting the state of a qubit. In the present embodiment, the qubit detection module 3 detects the state of the qubit by detecting photons emitted from the qubit. For example, the photons emitted from the qubit may be fluorescence from the qubit. In one example, the qubit detection module 3 may be an imaging device with low enough readout noise to distinguish the number of photoelectrons.

The qubit detection module 3 includes an imaging unit 10, a processing unit 20, and an output unit 25. The imaging unit 10, processing unit 20, and output unit 25 may be housed in a casing 5 that forms the exterior of the module. The imaging unit 10 captures an image of a target and generates imaging data. Note that imaging may refer to converting an image of the target into an electrical signal. The imaging unit 10 may be a so-called image sensor, and in one example, it may be a CMOS (Complementary Metal-Oxide-Semiconductor) image sensor. The imaging unit 10 may also be a CCD (Charge Coupled Device) image sensor. The imaging unit 10 may also be an SPAD (Single Photon Avalanche Diode) image sensor.

The imaging unit 10 includes multiple pixels 11 and an A/D converter 15. The multiple pixels 11 are arranged two-dimensionally in rows and columns. Each pixel 11 includes a photodiode (photoelectric conversion element) 12 and an amplifier 13. The photodiode 12 accumulates electrons (photoelectrons) generated by the input of photons as a charge. The amplifier 13 converts the charge accumulated in the photodiode 12 into a voltage and amplifies it. The amplified voltage is transferred to a vertical signal line 16 for each line (row) by switching a selection switch 14 for each pixel 11. A CDS (Correlated Double Sampling) circuit 17 is disposed in each vertical signal line 16. The CDS circuit 17 removes noise that varies between pixels and temporarily stores the transferred voltage.

The A/D converter 15 converts the voltage output from the amplifier 13 of each of the multiple pixels 11 into a digital value. Since the digital value reflects the luminance of the pixel 11, it may be referred to as a luminance value in the following description. Note that the luminance value may be synonymous with the pixel value. In the present embodiment, the A/D converter 15 converts the voltage stored in the CDS circuit 17 into a digital value. The converted digital values are output to the processing unit 20. For example, the digital values may be sent to a horizontal signal line (not shown) by column selection switching and output to the processing unit 20. In this way, when photons are input to each pixel 11, the imaging unit 10 outputs a digital value corresponding to the number of input photons to the processing unit 20. Note that the A/D converter 15 may be provided for each pixel 11.

When the voltage amplified by the amplifier 13 is read out, random noise known as readout noise occurs within the amplifier 13. If the readout noise is large, the accuracy of qubit state detection may decrease. For example, when detecting the presence or absence of fluorescence from a qubit, the digital value may increase due to the readout noise of the amplifier 13, potentially leading to a false determination that fluorescence is emitted from the qubit even when no fluorescence is present.

In quantum computing technology, it is assumed that qubit state detection is performed repeatedly, so it is desirable for the accuracy of a single state detection to be close to 100%. Therefore, in the present embodiment, an imaging unit 10 with low readout noise is used to achieve a state detection accuracy of 99.9% or higher in a single detection. For example, the performance of the imaging unit 10 can be evaluated based on image simulations of qubits with and without fluorescence. In an example simulation, the integrated luminance value of a predetermined area (e.g., 6×6 pixels) containing a qubit is calculated for both a qubit with fluorescence and a qubit without fluorescence, and a histogram of the integrated luminance values is created. Then, based on the histogram, a threshold is set to distinguish between a qubit with fluorescence and a qubit without fluorescence, and each integrated luminance value is determined based on that threshold.

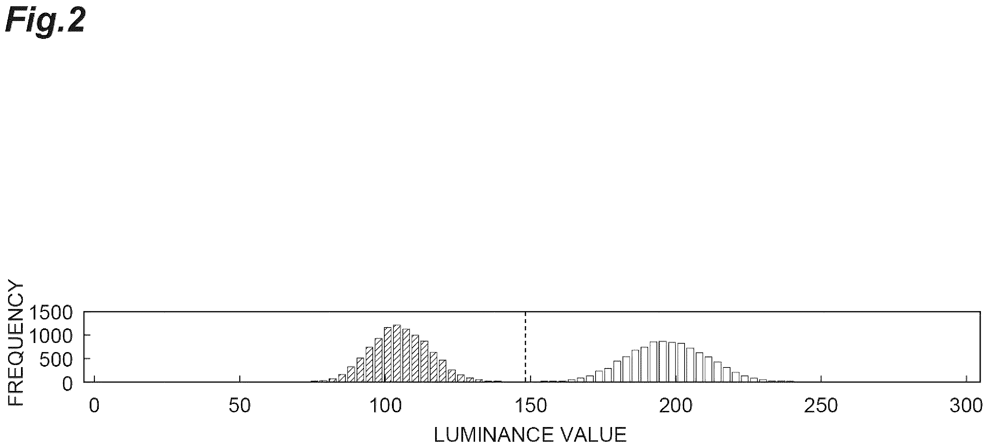

FIG. 2 shows the simulation results for a case where the readout noise of the imaging unit 10 is 0.27 e-rms. FIG. 2 is a histogram with the integrated luminance value of qubits on the horizontal axis and the frequency of qubits with and without fluorescence on the vertical axis. In this example, the exposure time is 20 ms. In the simulation example shown in FIG. 2, the accuracy of distinguishing between qubits with fluorescence and qubits without fluorescence was 99.98%. As a result of similar simulations with different readout noise levels, it was found that when the readout noise was approximately 0.7 e-rms or less, the discrimination accuracy was 99.9% or higher. In the present embodiment, to achieve a discrimination accuracy of 99.9% or higher, a CMOS image sensor with a readout noise of approximately 0.7 e-rms or less is used as the imaging unit 10.

The imaging unit 10 captures an imaging area that includes the arrangement position of a qubit and generates imaging data corresponding to the imaging area. The imaging data may be composed of multiple pieces of pixel data. The multiple pieces of pixel data may be composed of identification data identifying each pixel 11 and data indicating the luminance value associated with each identification data. For example, pixel data may be data in which position data indicating the position of a pixel (e.g., coordinate data, address, etc.) is associated with the luminance value of the pixel. In the present embodiment, the imaging of the imaging area by the imaging unit 10 may be performed while each qubit is irradiated with resonant light.

The imaging unit 10 sequentially generates each item of pixel data constituting the multiple pieces of pixel data and sequentially outputs the generated pixel data to the processing unit 20. For example, in the imaging unit 10, the luminance values of each pixel 11 are sequentially output from the A/D converter 15, and the output luminance values are input to the processing unit 20 along with position data specifying the position of the pixel 11. The order of outputting the luminance values may be predetermined. The imaging unit 10 may continuously capture the imaging area, which is the target of imaging, over multiple frames. In this case, the imaging unit 10 sequentially outputs the pixel data of each pixel to the processing unit 20 for each frame.

The processing unit 20 calculates state information indicating the state of a qubit based on the imaging data. For example, the processing unit 20 may include one or more FPGAs (Field-Programmable Gate Arrays). An FPGA is an integrated circuit with a programmable circuit configuration, such as an array of logic gates, capable of executing predetermined operations (functions) at a high speed based on the program. The arithmetic circuit constituting the processing unit 20 is not limited to an FPGA and may be configured using an ASIC (Application-Specific Integrated Circuit), a microcontroller, or the like. In the present embodiment, since the processing unit 20 is configured with an FPGA, the processing time can be reduced compared to a case where the processing unit is configured with a CPU or the like.

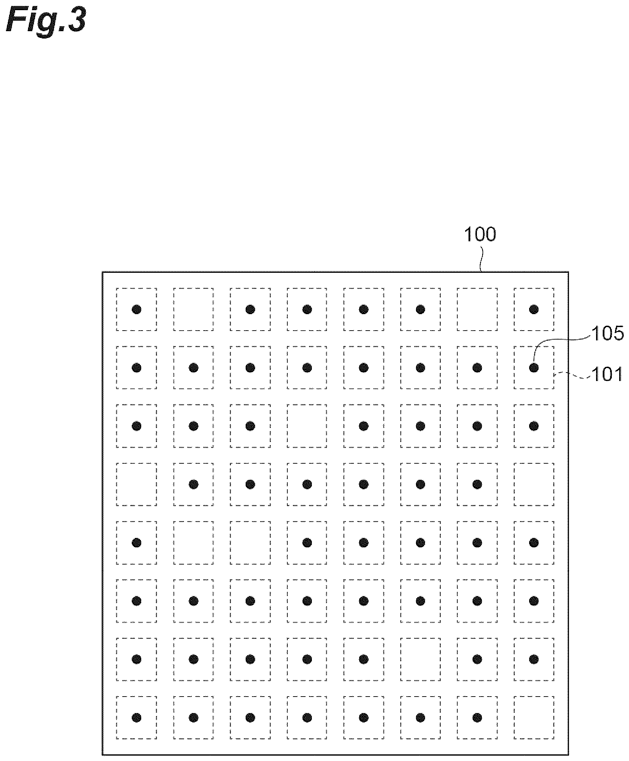

As shown in FIG. 1, the processing unit 20 includes, as its functional components, an ROI (Region of Interest) setting unit 21, a filter processing unit 22, and a state determination unit 23. The ROI setting unit 21 sets multiple ROIs smaller than the imaging area within the imaging area. FIG. 3 is a diagram schematically illustrating an image captured by the qubit detection module 3. In FIG. 3, qubits 105 that emitted fluorescence during imaging are shown in black, and the background is shown in white. The position and state of the qubits 105 are controlled by the qubit control unit 30. The qubits 105 are arranged at predetermined positions, for example, using a technique such as optical tweezers to trap atoms. Other known techniques for arranging qubits 105 at predetermined positions in space may also be used.

In the example of the imaging area 100 shown in FIG. 3, atoms that form qubits 105 are respectively arranged at positions separated from each other in an 8×8 grid pattern. In the following description, the vertical direction (height direction) when seen from the front of the drawings may be referred to as the X direction, and the horizontal direction may be referred to as the Y direction. The ROI setting unit 21 sets multiple ROIs 101 corresponding to the multiple qubits 105 within the imaging area 100. In FIG. 3, the set ROIs 101 are indicated by dashed lines. As shown, an example ROI 101 surrounds each qubit 105 in a rectangular shape. The size of an ROI 101 may be sufficient to encompass a qubit 105; for example, if a qubit 105 corresponds to 1×1 to 4×4 pixels, the ROI 101 may correspond to 1×1 to 6×6 pixels. The number of pixels corresponding to a qubit 105 and an ROI 101 is merely an example and is not limited thereto.

The filter processing unit 22 applies filter processing to the imaging data captured by the imaging unit 10. The filter processing may include, for example, threshold processing (static or dynamic), Gaussian fitting, pattern matching, Fourier transform, or the like. The filter processing may also be based on machine learning. By applying filter processing to the imaging data, the accuracy of the processing by the state determination unit 23 can be improved. The filter processing may be performed for each ROI 101 or for the entire imaging data.

The state determination unit 23 detects the state of the qubits 105 within the imaging area 100. In the present embodiment, the state determination unit 23 calculates state information for the qubits 105 within each of the multiple ROIs 101 set by the ROI setting unit 21. In one example, the state information may be binary data indicating the state of a qubit. For instance, the state determination unit 23 may have a luminance value threshold for determining the state of a qubit. The state determination unit 23 may obtain state information by comparing the threshold with the luminance values within an ROI.

This threshold may be determined based on prior experiments or the like, using a method similar to the threshold in the simulation described above. Specifically, with qubits 105 arranged in the imaging area 100, the integrated luminance value within an ROI 101 is calculated, and a threshold for distinguishing between qubits 105 with fluorescence and qubits 105 without fluorescence is derived from a histogram created based on the integrated luminance values. A qubit 105 with fluorescence is a qubit in the ground state, which emits fluorescence when irradiated with light that causes a transition to the fluorescence level. A qubit 105 without fluorescence is a qubit in the excited state.

The state determination unit 23 calculates an integrated luminance value by summing the luminance values of all pixels 11 within an ROI 101 to be determined. Based on a comparison between the integrated luminance value and the threshold, the state determination unit 23 may determine that the qubit 105 is in the ground state if the integrated luminance value is greater than the threshold, and in the excited state if the integrated luminance value is equal to or less than the threshold. The state determination unit 23 may associate the determination result with identification data of the ROI 101. The determination result may be binary data indicating the presence or absence of fluorescence, i.e., binary data indicating whether the qubit is in the ground state or the excited state. The identification data of an ROI 101 may be address data assigned to each ROI 101 or position data of a reference pixel within each ROI 101. The reference pixel may be a predetermined pixel within the ROI (e.g., the pixel at the top-left corner) or a pixel located at the center of the qubit 105 within each ROI 101.

In the present embodiment, pixel data sequentially generated by the imaging unit 10 is sequentially input to the processing unit 20. The state determination unit 23 may calculate state information for a given ROI 101 once all pixel data for that ROI 101 have been acquired, even during the acquisition of imaging data for the imaging area 100. For example, the state determination unit 23 may sequentially sum the luminance values of the pixel data each time pixel data for a pixel within an ROI 101 is acquired.

When imaging data is output from the imaging unit 10 to the processing unit 20 over multiple frames, the processing unit 20 may calculate state information for each frame of the imaging data. In other words, the integrated luminance value of pixels within an ROI 101 may be the integrated value for a single frame, not an integrated value across multiple frames.

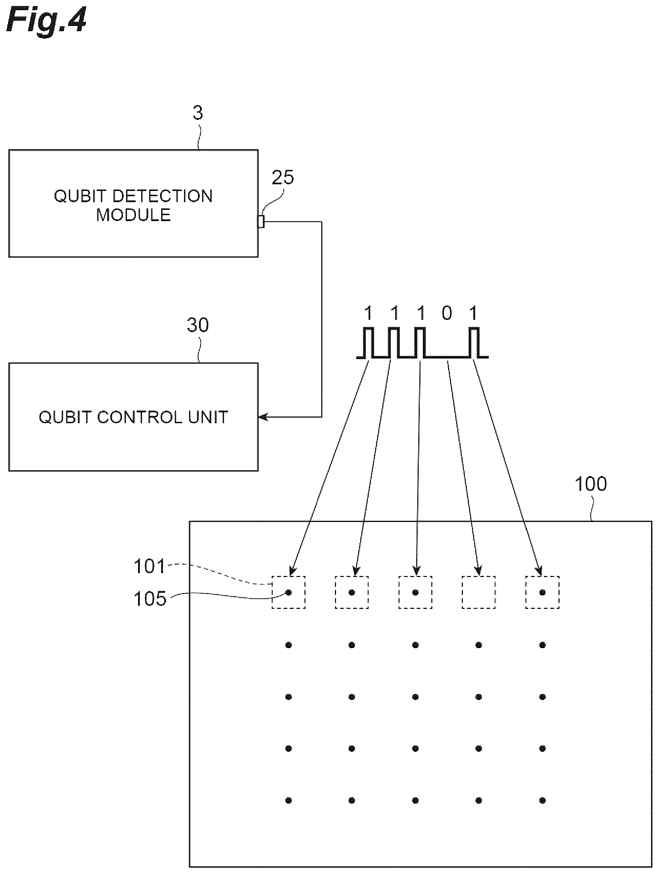

The output unit 25 outputs the state information indicating the state of the qubits 105, calculated by the processing unit 20, to the outside of the qubit detection module 3. In the present embodiment, the output unit 25 outputs the state information to the qubit control unit 30. For example, the output unit 25 of the qubit detection module 3 may be a serial I/O such as USB (Universal Serial Bus). FIG. 4 is a conceptual diagram for explaining an example of the output form from the qubit detection module 3 to the qubit control unit 30. As shown, in one example, the state information of multiple ROIs 101 may be output to the qubit control unit 30 via a single output unit 25 provided in the qubit detection module 3. The output unit 25 may sequentially output binary data including the state information corresponding to each ROI 101. In the illustrated example, the output data is composed of binary values: "1" indicating that fluorescence from a qubit was detected, and "0" indicating that fluorescence was not detected. In other words, the binary data output from the output unit 25 may be data in which "1" (indicating the ground state) and "0" (indicating the excited state) are arranged in the order of the ROIs 101.

The qubit control unit 30 controls the state of the qubits 105 based on the state information input from the qubit detection module 3. The qubit control unit 30 may include a processing circuit that receives the state information and a laser irradiation system controlled by the processing circuit. The laser irradiation system may be configured as a separate device from the qubit control unit 30. For example, the processing circuit of the qubit control unit 30 may include an FPGA. The qubit control unit 30 has correct information about the desired state of the qubits and compares this correct information with the state information input from the qubit detection module 3. If the qubit control unit 30 determines, based on the comparison between the correct information and the state information, that a qubit is not in the correct state, it corrects the state of that qubit. The correction of the qubit state may be performed by controlling the laser irradiation state applied to the qubit.

For example, if a qubit that should be in the excited state is in the ground state and emitting fluorescence, the qubit control unit 30 may irradiate the qubit with a laser to transition it to the excited state. In this manner, error correction (state control) by laser irradiation may involve a technique of manipulating the quantum state by irradiating a specific qubit with a laser. Additionally, the error correction technique may involve controlling the intensity, phase, or other properties of the laser irradiated onto the qubit using a spatial light modulator (SLN), an acousto-optic modulator (AOM), or the like, to manipulate the arrangement of the qubit. For instance, if it is assumed that all qubits 105 are controlled to be in the ground state and an ROI 101 is detected where no fluorescence is observed, the processing unit 20 or the qubit control unit 30 may determine that the qubit within that ROI 101 is not trapped at its intended position. In this case, the qubit control unit 30 may perform repositioning of the qubit through optical trap control using a laser.

The module control unit 40 controls the operation of the qubit detection module 3. The module control unit 40 is physically configured with a storage device such as RAM or ROM, a processor (arithmetic circuit) such as a CPU, a communication interface, and the like. Examples of the module control unit 40 include a personal computer, a cloud server, a smart device (such as a smartphone or tablet), a microcomputer, an FPGA, or the like. A display device such as a display, and input devices such as a keyboard or mouse, may be connected to the module control unit 40.

The module control unit 40 is communicatively connected to the processing unit 20 via an output terminal different from the output unit 25 provided in the qubit detection module 3. The module control unit 40 may acquire image data from the processing unit 20 and display the image of the imaging area 100 on the display. In one example, the module control unit 40 may be used to control the setting of ROIs 101. For instance, a user may designate an ROI by operating a mouse while the image of the imaging area 100 is displayed on the display. As an example, the module control unit 40 may recognize a rectangular frame, defined by a diagonal line connecting the start and end points of a mouse drag operation on the display, as an ROI. Additionally, when a mouse click operation is performed on the display, the module control unit 40 may recognize the clicked coordinates as the center pixel of an ROI and recognize a predetermined set of surrounding pixels, including the center pixel, as the ROI.

Furthermore, the module control unit 40 may determine the set positions of qubits within the imaging area by automatically recognizing image data of captured qubits. In this case, the module control unit 40 may form a grid with intersections at the recognized qubit positions and set ROIs centered on the grid intersections.

Additionally, a user may designate an ROI by inputting position data (coordinate data) for the ROI. The position data may be numerical data directly input by the user or data in an external file in a table format. The position data may consist of coordinates of a predetermined reference point of the ROI, data determining the vertical width of the ROI, and data determining the horizontal width of the ROI. The coordinates of the reference point may be composed of an offset distance in the right direction (X direction) from the top-left corner of the image (offset X) and an offset distance in the downward direction (Y direction) from the top-left corner of the image (offset Y). Alternatively, the position data may consist of the coordinates of two diagonal points of a rectangular ROI. In cases where position data is input, it is not necessary to display the image data of the imaging area on the display.

Furthermore, the data designated by the user may include position data for a specific ROI, the step size and number of ROIs in the X direction, and the step size and number of ROIs in the Y direction. In this case, all ROIs formed will be of the same size. Similarly, when forming ROIs of the same size, the reference coordinates (e.g., the coordinates of the top-left corner) of each ROI and the vertical and horizontal widths common to all ROIs may be specified.

As described above, an example of the qubit detection module 3 includes an imaging unit 10, a processing unit 20, and an output unit 25. The imaging unit 10 captures an imaging area 100 that includes the arrangement position of qubits 105 and generates imaging data corresponding to the imaging area 100. The processing unit 20 calculates state information indicating the state of the qubits 105 based on the imaging data. The output unit 25 outputs the state information to the outside of the module.

For example, in a system that detects the state of qubits, transferring image data of captured qubits to an external control system may involve a large amount of data, making high-speed processing difficult. This tendency becomes particularly pronounced in systems that detect the states of a large number of qubits simultaneously. In the above qubit detection module 3, since the state information of the qubits 105 calculated by the processing unit 20 based on the imaging data is output to the outside of the module from the module, the amount of output data is reduced compared to outputting the image data of the captured qubits 105 as is. This enables high-speed output of the qubit 105 information. In other words, the state detection of qubits 105 can be accelerated. By generating the state information of qubits within the qubit detection module 3 that captures the qubits, the process of analyzing the qubit states in the qubit control unit 30 can be reduced.

The state information may be binary data indicating the state of the qubits 105. Since the state information is expressed as binary data, the amount of data output externally is significantly reduced, enabling high-speed output of the state information.

The imaging unit 10 may continuously capture the imaging area 100 over multiple frames, and the processing unit 20 may calculate state information for each frame of the imaging data. With this configuration, data output can be performed for each frame, enabling the output of qubit 105 information without delay.

The processing unit 20 may set multiple ROIs 101 smaller than the imaging area 100 within the imaging area 100 and calculate state information for each of the multiple ROIs 101. With this configuration, a single imaging unit 10 can detect multiple qubits 105.

The imaging data may be composed of multiple pieces of pixel data. The imaging unit 10 may sequentially generate each item of pixel data constituting the multiple pieces of pixel data. The processing unit 20 may acquire the imaging data by sequentially obtaining the pixel data sequentially generated by the imaging unit 10, and may calculate state information for one ROI 101 at the stage when all pixel data for one ROI 101 among the multiple ROIs 101 have been acquired during the acquisition of the imaging data. With this configuration, state information can be output for each ROI, enabling the output of qubit 105 information without delay.

A qubit control system 1 according to one aspect includes the above qubit detection module 3 and a qubit control unit 30. The qubit control unit 30 controls the state of qubits based on the state information output from the qubit detection module 3.

In the above qubit control system 1, the state information of qubits calculated based on the imaging data is output from the module to the qubit control unit 30. Therefore, compared to outputting the image data of captured qubits to the qubit control unit 30, the amount of output data is reduced, enabling high-speed output of qubit information. Consequently, by accelerating qubit state detection, the qubit control unit 30 can execute state control of qubits at a high speed.

Although the embodiment has been described in detail with reference to the drawings, the specific configuration is not limited to this embodiment.

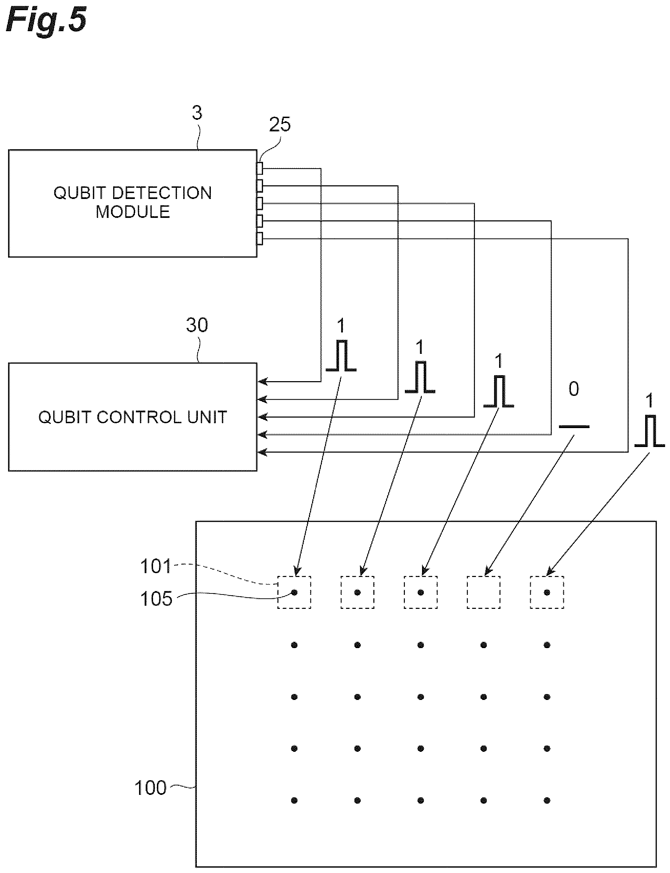

For example, FIG. 5 is a diagram for explaining a variation of the output form from the qubit detection module 3 to the qubit control unit 30. In this variation, the qubit detection module 3 has multiple output units 25 corresponding to the multiple ROIs 101. When the state information of any ROI 101 is detected by the processing unit 20, the state information of that ROI 101 is output to the qubit control unit 30 via the output unit 25 corresponding to that ROI 101.

In the above embodiment, an example was shown in which the ROI 101 is rectangular, but the ROI 101 is not limited to a rectangular shape. The ROI may have any planar shape as long as it has a certain area capable of encompassing a qubit 105, for example, a circular shape or a polygonal shape other than a quadrilateral. For instance, when the ROI has a circular shape, the user may specify the coordinates of the center position of the ROI and the diameter or radius of the ROI.

Furthermore, while an example was shown in which the state information is binary data indicating the state of a qubit, it is not limited to this. For example, the state information may be the luminance value (integrated luminance value) detected in a qubit or ROI.

In the above embodiment, an example was shown in which the processing unit 20 sets multiple ROIs in the imaging area 100 and outputs state information for each ROI, but it is not always necessary to set ROIs. For example, the processing unit 20 may have a threshold for determining the state of a qubit 105 and calculate the coordinates of the qubit 105, determined based on the threshold, as the state information. As an example, the processing unit 20 may acquire image data of the imaging area and obtain the coordinates of a qubit based on a threshold for determining the fluorescence of the qubit. For instance, the processing unit 20 may binarize the image data into pixels where fluorescence is detected and pixels where fluorescence is not detected based on the threshold, and acquire the centroid position, center position, or the like of the pixel region where fluorescence is detected as the coordinates of the qubit. Thus, the processing unit 20 calculates data indicating the coordinates of a qubit emitting fluorescence as the state information of the qubit. In this case, the qubit control unit 30 may have the arrangement coordinates of the qubits in advance. The qubit control unit 30 may determine the state of each qubit by comparing the arrangement coordinates with the state information output from the processing unit 20. For example, when coordinate data is input from the processing unit 20, the qubit control unit 30 may determine that a qubit located at the coordinates included in the data is in the ground state, and a qubit located at coordinates not included in the data is in the excited state. For detecting coordinates, techniques such as pattern matching may be used, for example.

Additionally, while an example was shown in which neutral atoms are used as qubits, a qubit may be any entity whose state can be controlled by external operations, for example, an ionized atom.

The embodiments of the present disclosure may be expressed as follows:
[1] A module for detecting the state of a qubit, including:
   an imaging unit configured to capture an imaging area including the arrangement position of the qubit and generate imaging data corresponding to the imaging area;
   a processing unit configured to calculate state information indicating the state of the qubit, with a smaller data volume than the imaging data, based on the imaging data; and
   an output unit configured to output the state information to the outside of the module.
[2] The qubit detection module according to [1], wherein the state information is binary data indicating the state of the qubit.
[3] The qubit detection module according to either [1] or [2], wherein the processing unit sets multiple target areas smaller than the imaging area within the imaging area and calculates the state information for each of the multiple target areas.
[4] The qubit detection module according to [5], wherein:
   the imaging data is composed of multiple pieces of pixel data;
   the imaging unit sequentially generates each item of pixel data constituting the multiple pieces of pixel data; and
   the processing unit acquires the imaging data by sequentially obtaining the pixel data generated by the imaging unit and calculates the state information for one target area once all pixel data for that target area among the multiple target areas have been acquired during the acquisition of the imaging data.
[5] The qubit detection module according to [1], wherein the processing unit has a threshold for determining the state of the qubit and calculates the coordinates of the qubit, determined based on the threshold, as the state information.
[6] The qubit detection module according to any one of [1] to [5], wherein: the imaging unit continuously captures the imaging area over multiple frames; and
   the processing unit calculates the state information for each frame of the imaging data.
[7] A qubit control system including:
   the qubit detection module according to any one of [1] to [6]; and
   a qubit control unit configured to control the state of the qubit based on the state information output from the qubit detection module.

### Reference Signs List

1: Qubit control system, 3: Qubit detection module, 10: Imaging unit, 20: Processing unit, 25: Output unit, 30: Qubit control unit

## Claims

1. A module for detecting the state of a qubit, comprising: an imaging unit configured to capture an imaging area including the arrangement position of the qubit and generate imaging data corresponding to the imaging area;
a processing unit configured to calculate state information indicating the state of the qubit, with a smaller data volume than the imaging data, based on the imaging data; and
an output unit configured to output the state information to the outside of the module.

2. The qubit detection module according to claim 1, wherein the state information is binary data indicating the state of the qubit.

3. The qubit detection module according to claim 1 or 2, wherein the processing unit sets multiple target areas smaller than the imaging area within the imaging area and calculates the state information for each of the multiple target areas.

4. The qubit detection module according to claim 3, wherein:
the imaging data is composed of multiple pieces of pixel data;
the imaging unit sequentially generates each item of pixel data constituting the multiple pieces of pixel data; and
the processing unit acquires the imaging data by sequentially obtaining the pixel data generated by the imaging unit and calculates the state information for one target area once all pixel data for that target area among the multiple target areas have been acquired during the acquisition of the imaging data.

5. The qubit detection module according to claim 1, wherein the processing unit has a threshold for determining the state of the qubit and calculates the coordinates of the qubit, determined based on the threshold, as the state information.

6. The qubit detection module according to claim 1, wherein:
the imaging unit continuously captures the imaging area over multiple frames; and
the processing unit calculates the state information for each frame of the imaging data.

7. A qubit control system comprising:
the qubit detection module according to claim 1; and
a qubit control unit configured to control the state of the qubit based on the state information output from the qubit detection module.
